# NEUE EUROPÄISCHE PATENTSCHRIFT

(11) **EP 1 306 241 B2**
(45) Veröffentlichungstag und Bekanntmachung des Hinweises auf die Entscheidung über den Einspruch: **29.12.2010**
(45) Hinweis auf die Patenterteilung: 01.02.2006
(21) Anmeldenummer: 02019680.4
(22) Anmeldetag: 04.09.2002
(51) Int. Cl.: B60H 1/00

(54) **Fahrzeugheiz- und Klimaanlage mit kombinierter Luftmisch- und -verteilklappe**
Motor vehicle heating and air conditioning system with combined air mixing and distributing damper door
Dispositif de chauffage ou de climatisation d'un véhicule avec un volet de mixage et de distribution d'air

(30) Priorität: 23.10.2001 DE 10152221
(43) Veröffentlichungstag der Anmeldung: 02.05.2003
(73) Patentinhaber: Behr France Rouffach SAS, 68250 Rouffach (FR)
(72) Erfinder: Klein, Henri, 68000 Colmar (FR); Schlachter, Claude, 68480 Wolschwiller (FR)
(74) Vertreter: Grosse, Rainer

(56) Entgegenhaltungen:
- EP-A- 0 768 197
- EP-B1- 0 266 230
- EP-B1- 0 709 241
- EP-B1- 1 319 540
- WO-A1-01/08911
- DE-A- 19 501 593
- DE-A- 19 518 280
- DE-C2- 3 805 168
- FR-A1- 2 715 352
- FR-A1- 2 720 693
- FR-A1- 2 798 322
- JP-A- 63 011 413
- US-A- 4 852 638
- US-A- 5 062 352
- US-B1- 6 261 172

## Beschreibung

Die Erfindung betrifft eine Heizungs- oder Klimaanlage für ein Fahrzeug, insbesondere für ein Kraftfahrzeug, gemäß Oberbegriff des Anspruchs 1.

Heizungs- oder Klimaanlagen für Fahrzeuge sind bekannt. Sie umfassen einen Heizkörper und mehrere, dem Heizkörper in Strömungsrichtung nachgeordnete Luftkanäle, die mit unterschiedlichen Zonen (Fußraum, Mittelbereich, Windschutzscheibe) der Fahrgastzelle in Verbindung stehen und denen temperierte Luft zuführbar ist. Die Temperatur und die Verteilung der Luft auf die einzelnen Luftkanäle erfolgt separat voneinander mit Hilfe von Bedienschaltern und Bowdenzügen, die zugeordnete Luftklappen bewegen. Aufgrund der vorstehend genannten Bauteile sind die Kosten der Heizungs-oder Klimaanlage relativ hoch.

Aus der US-5062352 ist eine Heizungs- oder Klimaanlage der eingangs genannten Art für ein Fahrzeug bekannt, die mindestens einen Heizkörper und mehrere, stromabwärts vom Heizkörper angeordnete Luftkanäle aufweist. Den Luftkanälen ist ein über den Heizkörper geführter erster Luftstrom und ein am Heizkörper vorbei geführter zweiter Luftstrom zuführbar. Ferner ist eine in Strömungsrichtung vor den Luftkanälen angeordnete Luftklappe vorhanden, über die eine Luftmischung und eine Luftverteilung einstellbar sind.

Die Aufteilung des Gesamtluftstroms erfolgt vor dem Heizkörper und vor der Kühleinrichtung. Da der Kühleinrichtung ein Umströmungsweg zugeordnet werden muss, weist die bekannte Einrichtung eine entsprechend große Bauform auf und es ergeben sich entsprechende Strömungswiderstände.

Aus der EP 0 709 241 B1 ist eine Heizungs- oder Klimaanlage bekannt, die einen in einem Gehäuse angeordneten Heizkörper aufweist, wobei das Gehäuse ferner eine Trommelklappe aufnimmt, die - im Querschnitt gesehen - eine im wesentlichen halbkreisförmige Struktur besitzt. Die Trommelklappe weist zwei axial sowie geringfügig umfänglich zueinander versetzt liegende Teilluftklappen auf.

Der Erfindung liegt die Aufgabe zugrunde, eine Heizungs- oder Klimaanlage der eingangs genannten Art zu schaffen, die bei einer flexiblen Betriebsführung eine geringe Baugröße und einen geringen Strömungswiderstand aufweist.

Zur Lösung der Aufgabe wird eine Heizungs- oder Klimaanlage mit den Merkmalen des Anspruchs 1 vorgeschlagen. Sie umfasst mindestens einen Heizkörper und mehrere, stromabwärts vom Heizkörper angeordnete Luftkanäle, denen ein über den Heizkörper geführter erster Luftstrom und ein am Heizkörper vorbeigeführter zweiter Luftstrom zuführbar sind, sowie mit mindestens einer Luftklappe, die als Trommelklappe ausgeführt und in Strömungsrichtung vor den Luftkanälen angeordnet ist, wobei mittels der Luftklappe die Aufteilung der gesamten Luftmenge auf den ersten und den zweiten Luftstrom, die Mischung der Luftströme und die Luftverteilung auf die Luftkanäle einstellbar ist. Bei dem ersten Luftstrom handelt es sich um Warmluft; bei dem zweiten Luftstrom um Frisch-, Um- und/oder Kaltluft. Die Heizungs- oder Klimaanlage hat eine in Strömungsrichtung vor dem Heizkörper angeordnete Kühleinrichtung, insbesondere ein Verdampfer, über die/den ein Zuluftstrom geführt ist, wobei der Zuluftstrom nach der Kühleinrichtung in den ersten und den zweiten Luftstrom aufteilbar ist. Die als Trommelklappe ausgebildete Luftklappe weist also eine Doppelfunktion auf. Zum einen ist mit ihrer Hilfe die Temperatur der den Luftkanälen zuführten Luft einstellbar, die sich zumindest aus der an dem Heizkörper vorbeigeführten Luft und/oder der über den Heizkörper geführten, erwärmten Luft zusammensetzt. Zum anderen dient die Luftklappe gleichzeitig dazu, die Luft in gewünschter Weise auf die Luftkanäle zu verteilen. Da hierdurch die Luftverteilung und -mischung mittels einer einzigen Luftklappe möglich ist, können die Kosten für die Heizungs- oder Klimaanlage reduziert werden, ohne dass der Komfort nachteilig beeinflusst wird.

Bei der Heizungs- oder Klimaanlage ist vorgesehen, dass die Luftklappe in einem in Strömungsrichtung hinter dem Heizkörper angeordneten Mischraum angeordnet ist. Durch die zentrale Anordnung der Luftklappe kann eine kompakte Bauweise der Heizungs- oder Klimaanlage realisiert werden.

Die Luftklappe weist einen trommelförmigen Grundkörper auf, der erste und zweite Teilluftklappen umfasst, die einander diametral gegenüberligen und einen kreisabschnittsförmigen Querschnitt aufweisen. Mit dem Mischraum stehen ein erster Luftkanal, ein zweiter Luftkanal sowie ein dritter Luftkanal in Verbindung. In dem dritten Luftkanal ist eine zweite Luftklappe angeordnet, die als Schwenkklappe ausgebildet und um eine gegenüber dem Gehäuse ortsfeste Achse schwenkbar ist, wobei die erste une die zweite Luftklappe mechanisch miteinander gekoppelt sind.

Besonders bevorzugt wird ein Ausführungsbeispiel der Heizungs- oder Klimaanlage, das sich dadurch auszeichnet, dass in einer ersten Stellung der Luftklappe der Strömungspfad des ersten Luftstroms und ein erster Luftkanal -vorzugsweise vollständig- geöffnet sowie der Strömungspfad des zweiten Luftstroms verschlossen ist. In dieser Stellung der Luftklappe wird also nur der erste Luftkanal -vorzugsweise ausschließlich- mit dem vom Heizkörper erwärmten Luftstrom versorgt, während vorzugsweise alle anderen Luftkanäle verschlossen sind. Bei einer vorteilhaften Ausführungsvariante der Heizungs- oder Klimaanlage ist der erste Luftkanal ein Entfrostungskanal, der mit mindestens einer im Bereich einer Scheibe, vorzugsweise der Windschutzscheibe, des Fahrzeugs vorgesehenen Entfrostungsöffnung, die als Düse oder schlitzförmig ausgebildet sein kann, in Verbindung steht. In der ersten Luftklappenstellung wird mittels der Heizungs- oder Klimaanlage der vorzugsweise größtmögliche zu Verfügung stellbare Volumenstrom erwärmter Luft der Scheibe zugeführt, um diese zu Enteisen oder Beschlag zu entfernen beziehungsweise zu verhindern. Um dieses in bestmöglicher Weise sicherzustellen, ist der mindestens eine andere Luftkanal verschlossen.

Weiterhin wird ein Ausführungsbeispiel der Heizungs- oder Klimaanlage bevorzugt, bei dem in der ersten Stellung der Luftklappe ein zweiter Luftkanal und gegebenenfalls ein dritter Luftkanal verschlossen sind. Der zweite Luftkanal ist vorzugsweise mit im Mittelbereich der Fahrgastzelle vorgesehenen Belüftungsdüsen oder -schlitzen verbunden. Vorzugsweise ist der dritte Luftkanal ein Fußraumkanal ist, der mit im Fußraum der Fahrgastzelle angeordneten Belüftungsdüsen oder -schlitzen verbunden ist.

Bevorzugt wird auch ein Ausführungsbeispiel der Heizungs- oder Klimaanlage, bei dem in einer zweiten Stellung der Luftklappe die Strömungspfade der ersten und zweiten Luftströme sowie die ersten und zweiten Luftkanäle zumindest teilweise geöffnet sind. In dieser Luftklappenstellung weist der über die ersten und zweiten Luftkanäle der Fahrgastzelle zuführte Luftstrom bei gleicher Heizleistung des Heizkörpers eine geringere Temperatur auf als bei der ersten Luftklappenstellung. Nach einer Weiterbildung ist vorgesehen, dass in der zweiten Stellung der Luftklappe der dritte Luftkanal (Fußraumkanal) verschlossen ist.

Weiterhin wird ein Ausführungsbeispiel der Heizungs- oder Klimaanlage bevorzugt, bei dem in einer dritten Stellung der Luftklappe die Strömungspfade der ersten und zweiten Luftströme sowie die drei Luftkanäle zumindest teilweise geöffnet sind. Der Fahrgastzelle wird also in allen zu belüftenden Zonen mehr oder weniger warme Luft zugeführt.

Bevorzugt wird auch ein Ausführungsbeispiel der Heizungs- oder Klimaanlage, das sich dadurch auszeichnet, dass in einer vierten Stellung der Luftklappe der Strömungspfad des ersten Luftstroms und der erste Luftkanal verschlossen sowie der Strömungspfad des zweiten Luftstroms und der zweite Luftkanal zumindest teilweise geöffnet sind. In dieser Luftklappenstellung wird also der mittleren Zone der Fahrgastzelle nicht erwärmte Luft, beispielsweise Frischluft, Umluft oder gegebenenfalls mittels einer Kühleinrichtung gekühlte Luft zugeführt, während die Entfrostungsdüse(n)/-schlitz(en) nicht mit Luft versorgt werden. Dabei ist vorzugsweise auch der dritte Luftkanal (Fußraumkanal) verschlossen.

Nach der Erfindung ist dem dritten Luftkanal, der zur Luftversorgung des Fußraums der Fahrgastzelle dient, eine separate zweite Luftklappe zugeordnet. Diese ist als Schwenkklappe ausgebildet und kann beispielsweise mittels eines eigens dafür vorgesehen Stellmittels, beispielsweise Handbetätigungshebel, bewegt werden. Die zweite Luftklappe und die erste Luftklappe sind mechanisch miteinander gekoppelt sein, so dass auf eine separates Stellmittel für die zweite Luftklappe verzichtet werden kann und beide Klappen mittels des vorstehend genannten Stellglieds bewegbar sind. Die Kopplung kann derart ausgeführt sein, dass die beiden Luftklappen immer gemeinsam bewegt werden. Alternativ kann vorgesehen sein, dass die beiden Luftklappen innerhalb vorgegebener Bereiche unabhängig voneinander bewegt werden, während sie innerhalb anderer Bereiche gleichzeitig bewegt werden.

Bei der Heizungs- oder Klimaanlage ist in Strömungsrichtung vor dem Heizkörper eine Kühleinrichtung, zum Beispiel ein Verdampfer angeordnet, über den ein Zuluftstrom geführt ist. Stromaufwärts der Kühleinrichtung kann dabei ein Gebläse vorgesehen sein. Der Zuluftstrom wird nach der Kühleinrichtung in die ersten und zweiten Luftströme aufgeteilt, was beispielsweise mittels einer geeigneten Trennwand ohne weiteres möglich ist.

Um der Fahrgastzelle auch in der zweiten und dritten Stellung der ersten Luftklappe ausschließlich nicht erwärmte, vorzugsweise mittels der Kühleinrichtung abgekühlte Luft zuführen zu können, ist bei einem vorteilhaften Ausführungsbeispiel der Heizungs- oder Klimaanlage eine weitere, dritte Luftklappe vorgesehen, die in Strömungsrichtung vor dem Heizkörper angeordnet ist und mittels derer der Strömungspfad zum Heizkörper verschließbar ist.

Schließlich wird eine Ausführungsform der Heizungs- oder Klimaanlage bevorzugt, die sich dadurch auszeichnet, dass sie eine luftseitig geregelte Heizungs- oder Klimaanlage ist.

Weitere vorteilhafte Ausführungsbeispiele der Heizungs- oder Klimaanlage ergeben sich aus Kombinationen der aus den Unteransprüchen hervorgehenden Merkmale.

Im folgenden wird die Erfindung anhand der Zeichnung näher erläutert. Dabei zeigen:
- Figur 1: eine schematische Darstellung einer nicht erfindungsgemäßen Heizungs- oder Klimaanlage;
- Figur 2: eine perspektivische Darstellung eines Ausführungsbeispiels einer ersten Luftklappe;
- Figur 3: einen Querschnitt durch die erste Luftklappe entlang der in Figur 1 abgebildeten Schnittlinie A-A;
- Figuren 4A bis 4E: jeweils eine schematische Darstellung der Heizungs- oder Klimaanlage gemäß Figur 1, wobei sich die erste Luftklappe in unterschiedlichen Stellungen befindet;
- Figur 5: vier Graphen, bei denen der Öffnungsgrad in Prozent für einen zweiten Luftkanal (Graph I), einen ersten Luftkanal (Graph II) und einen dritten Luftkanal (Graph III) sowie die Temperatur (Graph IV) von einer Fahrgastzelle zugeführten Luft in Abhängigkeit von der Stellung der ersten Luftklappe dargestellt ist; und
- Figur 6: eine schematische Darstellung eines erfindungsgemäßen Ausführungsbeispiels einer Heizungs- oder Klimaanlage.

Die im Folgenden beschriebene Heizungs- oder Klimaanlage 1 ist allgemein für Fahrzeuge, zum Beispiel Personenkraftwagen (Pkw), Lastkraftwagen (Lkw), Omnibusse und dergleichen, einsetzbar, die als Antriebsaggregat beispielsweise eine Brennkraftmaschine aufweisen. Die Heizungs- oder Klimaanlage 1 ist ohne weiteres auch für Elektrofahrzeuge oder Hybridfahrzeuge geeignet.

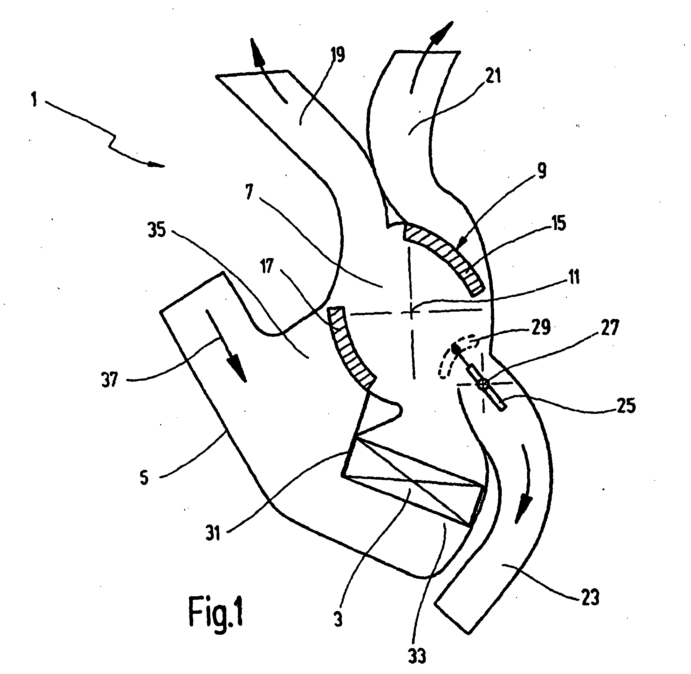

Figur 1 zeigt eine schematische Darstellung einer nicht erfindungsgemäßen Heizungs- oder Klimaanlage 1, die einen Heizkörper 3 aufweist, der in einem Gehäuse 5 angeordnet ist. In Strömungsrichtung vor dem Heizkörper 3 ist ein nicht dargestelltes Gebläse angeordnet. Stromabwärts des Heizkörpers 3 befindet sich ein Mischraum 7, in dem eine als Trommelklappe ausgebildete erste Luftklappe 9 angeordnet ist, die um eine gegenüber dem Gehäuse 5 ortsfeste Achse 11 schwenkbar ist. Das Bewegen der ersten Luftklappe 9 erfolgt mittels eines nicht dargestellten Stellglieds, beispielsweise eines Handbetätigungshebels. Aufgrund einer hier nicht vorgesehenen Kühleinrichtung für die Zuluft kann die Heizungs- oder Klimaanlage 1 hier lediglich im Heizungs- und Belüftungsmodus eingesetzt werden.

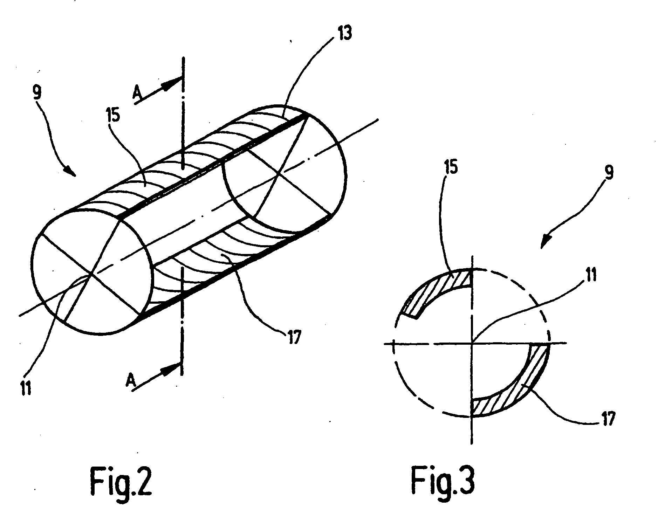

Wie aus den Figuren 2 und 3 ersichtlich, die jeweils eine Ansicht der in Figur 1 dargestellten Luftklappe 9 zeigen, weist die erste Luftklappe 9 einen trommelförmigen Grundkörper 13 auf, der erste und zweite Teilluftklappen 15 und 17 umfasst. Die Teilluftklappen 15, 17 liegen einander diametral gegenüber und weisen einen kreisabschnittförmigen Querschnitt auf. Der Aufbau der Trommelklappe ist an sich bekannt, so dass hier nicht näher darauf eingegangen wird.

Mit dem Mischraum 7 stehen ein erster Luftkanal 19, ein zweiter Luftkanal 21 sowie ein dritter Luftkanal 23 in Verbindung. Der erste Luftkanal 19 ist mit mindestens einer im Bereich der Windschutzscheibe des Fahrzeugs vorgesehenen, nicht dargestellten Entfrostungsdüse oder einem -schlitz und der zweite Luftkanal 21 mit mindestens einer im Mittelbereich der Fahrgastzelle angeordneten Mitteldüse oder einem -schlitz verbunden, während der dritte Luftkanal 23 mit mindestens einer im Fußraum der Fahrgastzelle vorgesehen Belüftungsdüse oder einem -schlitz in Verbindung steht. Die Luftkanäle 19 und 21 können mittels der Luftklappe 9 ganz oder teilweise geöffnet oder verschlossen werden.

Im dritten Luftkanal 23 ist eine zweite Luftklappe 25 angeordnet, die als Schwenkklappe ausgebildet und um eine gegenüber dem Gehäuse 5 ortsfeste Achse 27 schwenkbar ist. Die ersten und zweiten Luftklappen 9, 25 sind mechanisch miteinander gekoppelt, was bei dem in Figur 1 dargestellten Ausführungsbeispiel mittels einer Kurvenscheibe 29 angedeutet ist. Für die zweite Luftklappe 25 ist also kein separates Stellglied vorgesehen, um diese zu bewegen, sondern die zweite Luftklappe 25 wird beim Verschwenken der ersten Luftklappe 9 automatisch mitbewegt. Mittels der zweiten Luftklappe 25 kann der dritte Luftkanal 23 ganz oder teilweise geöffnet oder verschlossen werden.

Wie aus Figur 1 ersichtlich, ist der Raum vor dem Mischraum 7 mittels einer gegenüber dem Gehäuse 5 ortsfesten Trennwand 31 unterteilt, wodurch ein erster Strömungspfad 33, in dem der Heizkörper 3 angeordnet ist, und ein am Heizkörper 3 vorbeiführender zweiter Strömungspfad 35 gebildet sind. Die Strömungspfade 33, 35 können mittels der Teilluftklappe 17 ganz oder teilweise geöffnet oder verschlossen werden. Die vom Gebläse gelieferte Zuluft, beispielsweise Frischluft (Außenluft) oder der Fahrgastzelle entnommene Luft (Umluft), kann also -je nach Stellung der ersten Luftklappe 9-ganz oder teilweise über den Heizkörper 3, mittels dessen sie erwärmt wird, oder über den zweiten Strömungspfad 35 vorbei am Heizkörper 3 in den Mischraum 7 gelangen. Im Mischraum 7 werden die beiden Luftströme wieder zusammengeführt, damit sie sich vermischen können. Die gemischte Luft weist eine gewünschte Temperatur auf, die vom Mischungsverhältnis der beiden Luftströme abhängig ist, das wiederum mittels der ersten Luftklappe 9 einstellbar ist. Die erste Luftklappe 9 weist darüber hinaus eine weitere Funktion auf: Sie bestimmt die mengenmäßige Verteilung der dem Mischraum 7 zugeführten Luft auf die Luftkanäle, worauf im Folgenden noch näher eingegangen wird.

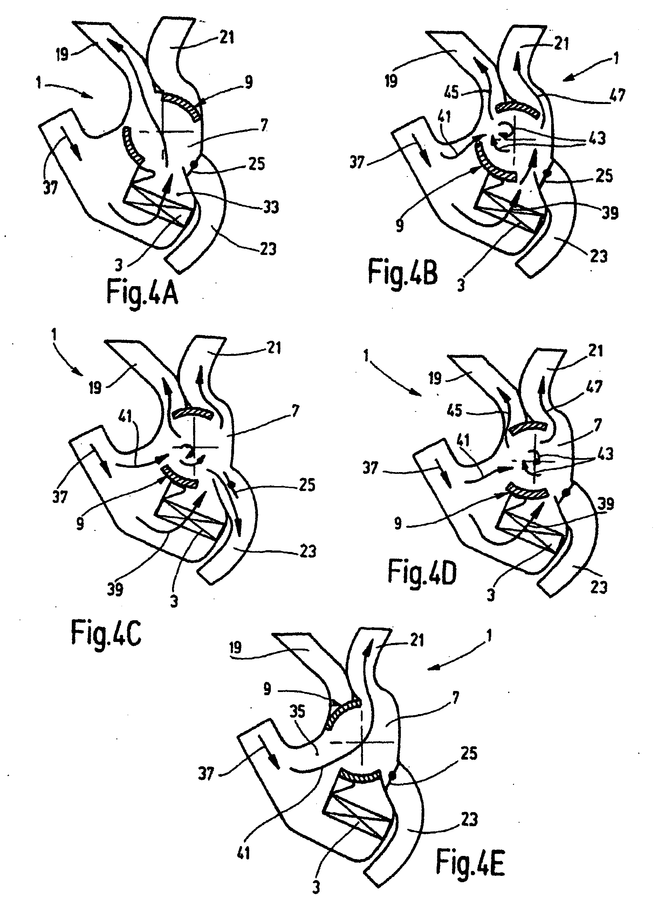

Figuren 4A bis 4E zeigen jeweils eine Ansicht des anhand der Figur 1 beschriebenen Ausführungsbeispiels der Heizungs- oder Klimaanlage 1 mit in unterschiedlichen Stellungen befindlichen erster Luftklappe 9.

In Figur 4A ist die erste Luftklappe 9 in eine erste Stellung (α₀) bewegt, die hier gleichzeitig auch eine Endstellung ist. In ihrer ersten Stellung (α₀) verschließt die Luftklappe 9 sowohl den zweiten Strömungspfad 35 als auch den zweiten Luftkanal 21, während der erste Strömungspfad 33 und der erste Luftkanal 19 ganz geöffnet sind. Die mit der ersten Luftklappe 9 gekoppelte zweite Luftklappe 25 befindet sich in Schließstellung. Es wird also die vom Gebläse gelieferte Zuluft 37 vollständig über den Heizkörper 3 geführt, wodurch sie sich erwärmt, und ausschließlich über den ersten Luftkanal 19 den Entfrostungsdüsen oder -schlitzen zugeführt.

In Figur 4B ist die erste Luftklappe 9 -ausgehend von der ersten Stellung (α₀)- entgegen dem Uhrzeigersinn in eine zweite Stellung (α₁) verschwenkt, so dass die ersten und zweiten Strömungspfade 33, 35 sowie die ersten und zweiten Luftkanäle 19, 21 jeweils teilweise geöffnet sind. Dadurch wird die Zuluft 37 aufgeteilt und es gelangen über den ersten Strömungspfad 33 eine erster Luftstrom 39, der vom Heizkörper 3 erwärmt wird, und über den zweiten Strömungspfad 35 ein zweiter Luftstrom 41, der -zumindest im Wesentlichen- die Temperatur der Zuluft 37 aufweist, in den Mischraum 7, wo sie sich miteinander vermischen, wie mit Pfeilen 43 angedeutet. Die aus "Kaltluft" und "Warmluft" gemischte Luft im Mischraum 7 gelangt dann in die jeweils teilweise geöffneten Luftkanäle 19 und 21, wie mit Pfeilen 45 und 47 angedeutet. Beim Verschwenken der ersten Luftklappe 9 in die zweite Stellung (α₁) ist die zweite Luftklappe 25 zwar ebenfalls verschwenkt worden, jedoch verschließt sie den dritten Luftkanal 23 nach wie vor.

In Figur 4C ist die erste Luftklappe 9 -ausgehend von der zweiten Stellung (α₁)- entgegen dem Uhrzeigersinn in eine dritte Stellung (α₂) verschwenkt, in der ersten und zweiten Strömungspfade 33, 35 sowie die ersten und zweiten Luftkanäle 19, 21 jeweils teilweise geöffnet bleiben. Dabei wird die zweite Luftklappe 25 so mitbewegt, dass sie den dritten Luftkanal 23 öffnet. Die Luft im Mischraum 7 gelangt in dieser Stellung der Luftklappenanordnung in alle drei Luftkanäle 19, 21, 23.

In Figur 4D ist die erste Luftklappe 9 -ausgehend von der dritten Stellung (α₂)- entgegen dem Uhrzeigersinn in eine Zwischenstellung (α₃) verschwenkt. Dabei wird die zweite Luftklappe 25 wieder in Schließstellung verlagert, so dass keine Luft in den dritten Luftkanal 25 gelangen kann. Gegenüber der zweiten Stellung der Luftklappe 9 ist der zweite Strömungspfad 35 nun weiter geöffnet, während der parallel dazu angeordnete erste Strömungspfad 33 entsprechend weniger geöffnet ist. Dasselbe gilt für den Luftkanäle 19, 21, das heißt der zweite Luftkanal 21 ist weiter geöffnet, während der erste Luftkanal 19 entsprechend weniger geöffnet ist.

In Figur 4E ist die erste Luftklappe 9 -ausgehend von der Zwischenstellung (α₃) gemäß der Darstellung der Figur 4D- entgegen dem Uhrzeigersinn in eine vierte Stellung (α₄) verschwenkt, die hier eine zweite Endstellung ist. In ihrer vierten Stellung (α₄) verschließt die Luftklappe 9 sowohl den ersten Strömungspfad 33 als auch den ersten Luftkanal 19, während der zweite Strömungspfad 35 und der zweite Luftkanal 21 ganz geöffnet sind. Die mit der ersten Luftklappe 9 gekoppelte zweite Luftklappe 25 befindet sich in Schließstellung. Es wird also die vom Gebläse gelieferte Zuluft 37 vollständig am Heizkörper 3 vorbeigeführt und ausschließlich den Mitteldüsen oder - schlitzen zugeführt. Die vierte Luftklappestellung (α₄) dient also nur dem Belüften der Fahrgastzelle mit Frischluft und/oder Umluft.

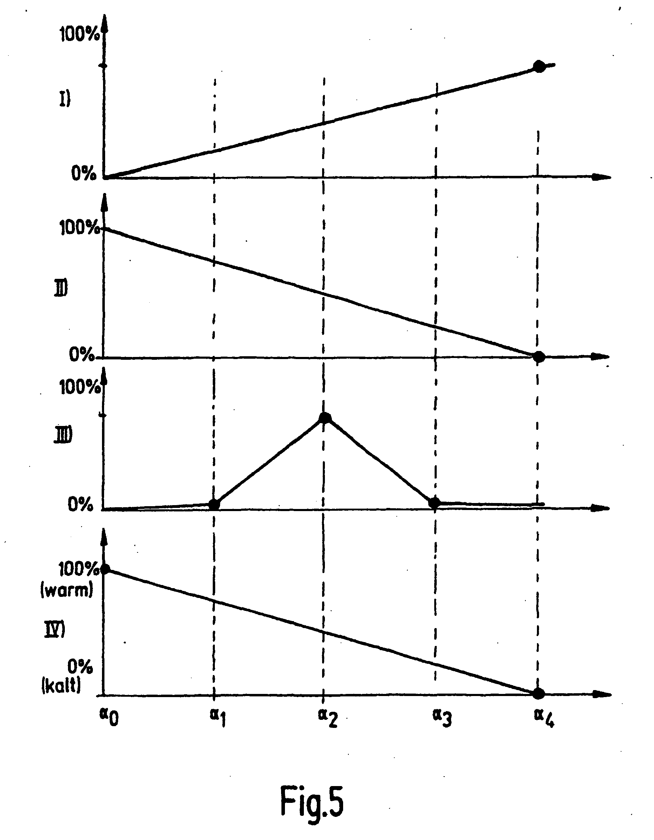

Figur 5 zeigt für die anhand der Figuren 1 bis 4E beschriebenen Heizungs-oder Klimaanlage 1 geltende Graphen I, II, III sowie IV, bei denen der Öffnungsgrad in Prozent für den zweiten Luftkanal 21 (Graph I, Belüftung), den ersten Luftkanal 19 (Graph II, Entfrostung) und den dritten Luftkanal 23 (Graph III, Fußraum) sowie für die Temperatur in Prozent der der Fahrgastzelle zugeführten Luft (Graph IV) in Abhängigkeit von der Winkelstellung α₀ bis α₄ der ersten Luftklappe 9 aufgetragen ist.

Aus den Graphen I bis IV ist ohne weiteres ersichtlich, dass in der Winkelstellung α₀ (erste Stellung) der Luftklappe 9 (siehe Figur 4A) nur der mit mindestens einer Entfrostungsdüse oder -schlitz verbundene erste Luftkanal 19 geöffnet ist und zwar vollständig, das heißt zu 100 %, während die zweiten und dritten Luftkanäle 21, 23 ganz verschlossen sind, was einem Öffnungsgrad von 0 % entspricht. Die Luft, die dabei über den ersten Luftkanal 19 in die Fahrgastzelle gelangt, besitzt eine maximale Temperatur (100 %). Die erste Luftklappe 9 ist ausgehend von der Winkelstellung α₀ stufenlos bis in die Winkelstellung α₄ (vierte Stellung, siehe Figur 4E) schwenkbar. Wie aus den Graphen I bis, IV erkennbar, werden auf dem gesamten Weg der Luftklappe 9 von der Winkelstellung α₀ bis zur Winkelstellung α₄ der erste Strömungspfad 33 und der erste Luftkanal 19 (Entfrostungskanal) progressiv verschlossen, während dabei der zweite Strömungspfad 35 und der zweite Luftkanal 21 progressiv geöffnet werden. Im Bereich der Winkelstellungen α₁ bis α₃ wird die zweite Luftklappe 25 bewegt, wobei sie dabei den dritten Luftkanal 23 (Fußraum) ganz öffnet und dann wieder vollständig verschließt. In den Winkelstellungen von α₁ bis α₃ wird ein Tri-level-mode erzeugt, das heißt hier sind alle drei Luftkanäle 19, 21, 23 teilweise geöffnet, so dass allen zu belüftenden Zonen (Windschutzscheibe, Mittelbereich, Fußraum) der Fahrgastzelle temperierte Luft zugeführt wird.

Den Graphen ist ohne weiteres entnehmbar, dass mit zunehmenden Schwenken der ersten Luftklappe 9 in Richtung der Winkelstellung α₄ die der Fahrgastzelle zugeführte Luft immer kälter wird, wobei in der Winkelstellung α₄ die Lufttemperatur am geringsten ist (0 %). Die Lufttemperatur entspricht hier also -zumindest in etwa- der Temperatur der vom Gebläse gelieferten Zuluft 37.

Anhand der Ausführungen zu den Figuren 1 bis 5 wird ohne weiteres deutlich, dass mittels der ersten Luftklappe 9 sowohl die Luftmischung der über die ersten und zweiten Strömungspfade 33, 35 in den Mischraum 7 gelangenden ersten und zweiten Luftströme 39, 41 und somit die Temperatur der der Fahrgastzelle zugeführten Luft als auch die Luftverteilung auf die mit der Fahrgastzelle in Verbindung stehenden Luftkanäle einstellbar ist. Hierfür werden bei bekannten Heizungs- oder Klimaanlagen mindestens zwei Luftklappen benötigt. Die erfindungsgemäße Heizungs- oder Klimaanlage daher kann aufgrund der verringerten Anzahl der Teile kostengünstiger hergestellt werden.

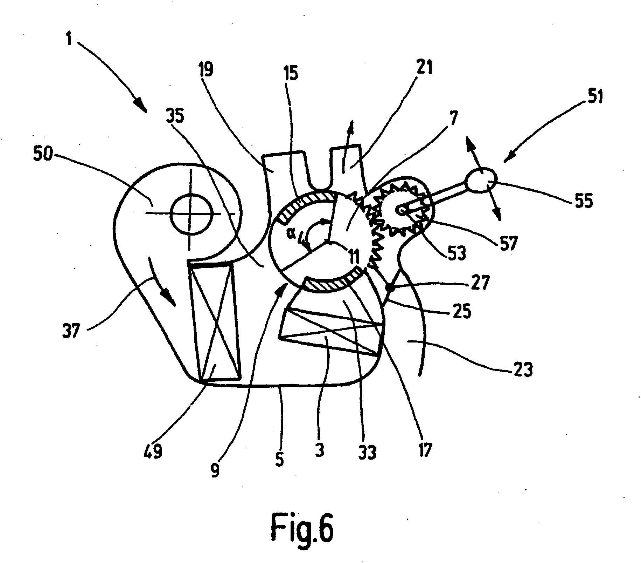

Figur 6 zeigt in schematischer Darstellung eine erfindungsgemäße Ausgestaltung einer Heizungs- oder Klimaanlage 1. Gleiche Teile sind mit gleichen Bezugszeichen versehen, so dass insofern auf die Beschreibung zu den vorangegangenen Figuren verwiesen wird. Die Heizungs- oder Klimaanlage 1 unterscheidet sich von der anhand der Figuren 1 bis 4E beschriebenen dadurch, dass eine Kühleinrichtung 49 vorgesehen ist, die stromaufwärts vom Heizkörper 3 angeordnet ist und über die die gesamte, hier vom dargestellten Gebläse 50 gelieferte Zuluft 37 geführt ist. Die Zuluft 37 ist mittels der Kühleinrichtung 49 abkühlbar. Erst stromabwärts der Kühleinrichtung 49 teilt sich die Zuluft 37 in die ersten und zweiten Luftströme 39, 41 auf. Die Kühleinrichtung 49 ermöglicht es, die Temperatur der der Fahrgastzelle zugeführten Luft in einem größeren Bereich einzustellen.

In bevorzugter Ausführungsform ist die Kühleinrichtung 49 als Verdampfer oder Wärmetauscher ausgebildet. Der Aufbau und die Funktion eines hier angesprochenen Verdampfers ist bekannt, insbesondere dessen zugeordnete Komponenten, wie zum Beispiel Kühlmittelkreislauf, Kompressor und dergleichen, so dass auf eine nähere Beschreibung verzichtet wird. Es soll hier nur darauf hingewiesen werden, dass die Kühleinrichtung ein- und ausschaltbar ist.

In Figur 6 ist ferner ein Stellglied 51 dargestellt, das hier von einem um eine Achse 53 schwenkbaren Handbetätigungshebel 55 gebildet ist. Der Handbetätigungshebel 55 ist über ein Zahnrad 57 mit der ersten Luftklappe 9 gekoppelt, die eine entsprechende Verzahnung aufweist, die kämmend mit dem Zahnrad 57 in Eingriff steht. Die Achse 53 verläuft parallel zur Schwenkachse 11 der ersten Luftklappe 9. Der in die Fahrgastzelle hineinragende Handbetätigungshebel 55 befindet sich am Gehäuse 5 der Heizungs-oder Klimaanlage 1 und ist hier im Wesentlichen senkrecht zur Bewegungsrichtung der ersten Luftklappe 9 bewegbar, wie mit Pfeilen angedeutet. Die Kosten und der Raumbedarf für das Stellglied 51 sind relativ gering.

Die Verbindung zwischen dem Stellglied 51 und der Luftklappe 9 kann grundsätzlich auch in anderer Form gestaltet werden, das heißt, die vorstehend beschriebene Zahnradausführung ist nur ein Ausführungsbeispiel.

Die anhand der Figuren 1 bis 6 beschriebenen Heizungs- oder Klimaanlagen 1 können zusätzlich noch mit einer dritten Luftklappe versehen sein, die in Strömungsrichtung der Zuluft 37 beziehungsweise des ersten Luftstroms 39 vor dem Heizkörper 3 angeordnet ist und mittels derer der Heizkörper 3 ganz abgesperrt, also der erste Strömungspfad 33 vollständig verschlossen werden kann. Dies ist insbesondere vorteilhaft, wenn die Heizungs- oder Klimaanlage 1 eine vorstehend beschriebene Kühleinrichtung 49 aufweist. Die dritte Luftklappe verschließt den zweiten Strömungspfad 33 vor dem Heizkörper 3 vorzugsweise dann vollständig, wenn sich die erste Luftklappe 9 in der vierten Stellung (siehe Figur 4E) befindet.

Die dritte Luftklappe kann mittels eines separaten Stellglieds unabhängig von der ersten Luftklappe 9 bewegbar sein. Denkbar ist auch, die dritte Luftklappe mit der ersten oder der zweiten Luftklappe zu koppeln, beispielsweise mechanisch zu koppeln, so dass beim Bewegen der ersten Luftklappe die dritte Luftklappe mitbewegt wird.

In Unteransprüchen verwendete Rückbeziehungen weisen auf die weitere Ausbildung des Gegenstandes des Hauptanspruchs durch die Merkmale des jeweiligen Unteranspruchs hin.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombinationen oder Abwandlung von einzelnen in Verbindung mit den in der allgemeinen Beschreibung und Ausführungsformen sowie den Ansprüchen beschriebenen und in den Zeichnungen enthaltenen Merkmalen beziehungsweise Elementen oder Verfahrensschritten für den Fachmann im Hinblick auf die Lösung der Aufgabe entnehmbar sind und durch kombinierbare Merkmale zu einen neuen Gegenstand oder zu neuen Verfahrensschritten beziehungsweise Verfahrensschrittfolgen führen.

## Patentansprüche

1. Heizungs- oder Klimaanlage (1) für ein Fahrzeug, mit mindestens einem, in einem Gehäuse (5) angeordneten Heizkörper (3) und mit mehreren, stromabwärts vom Heizkörper (3) angeordneten Luftkanälen (19,21,23), denen ein Ober den Heizkörper (3) geführter erster Luftstrom (39) und ein am Heizkörper (3) vorbeigeführter zweiter Luftstrom (41) zuführbar sind, sowie mit mindestens einer ersten Luftklappe (9), die als Trommelklappe ausgeführt und in Strömungsrichtung vor den Luftkanälen (19,21,23) angeordnet ist, wobei mittels der ersten Luftklappe (9) die Aufteilung der gesamten Luftmenge auf den ersten und den zweiten Luftstrom, die Mischung der Luftströme (39,41) und die Luftverteilung auf die Luftkanäle (19,21,23) einstellbar ist, wobei in Strömungsrichtung vor dem Heizkörper (3) eine Kühleinrichtung (49), insbesondere ein Verdampfer, angeordnet ist, über die ein Zuluftstrom (37) geführt ist, wobei die erste Luftklappe (9) in einem in Strömungsrichtung hinter dem Heizkörper (3) angeordneten Mischraum (7) angeordnet ist, in dem die ersten und zweiten Luftströme (39,41) sich miteinander vermischen können und mit dem ein erster Luftkanal (19), ein zweiter Luftkanal (21) sowie ein dritter Luftkanal (23) in Verbindung stehen, wobei die erste Luftklappe (9) einen trommelförmigen Grundkörper (13) aufweist, der erste und zweite Teilluftklappen (15,17) umfasst, die einander diametral gegenüber liegen und jeweils einen kreisabschnittförmigen Querschnitt aufweisen, **dadurch gekennzeichnet dass** der Zuluftstrom (37) nach der Kühleinrichtung (49) in den ersten und den zweiten Luftstrom (39,41) aufteilbar ist, und dass in dem dritten Luftkanal (23) eine zweite Luftklappe (25) angeordnet ist, die als Schwenkklappe ausgebildet und um eine gegenüber dem Gehäuse (5) ortsfeste Achse (27) schwenkbar ist, wobei die erste und die zweite Luftklappe (9,25) mechanisch miteinander gekoppelt sind.

2. Heizungs- oder Klimaanlage nach Anspruch 1, **dadurch gekennzeichnet, dass** in einer ersten Stellung der Luftklappe (9) der Strömungspfad (33) des ersten Luftstroms (39) und der erste Luftkanal (19) geöffnet sind, sowie der Strömungspfad (35) des zweiten Luftstroms (41) verschlossen ist.

3. Heizungs- oder Klimaanlage nach Anspruch 2, **dadurch gekennzeichnet, dass** in der ersten Stellung der Luftklappe (9) der zweite Luftkanal (21) und gegebenenfalls der dritte Luftkanal (23) verschlossen sind.

4. Heizungs- oder Klimaanlage nach einem der vorhergehenden Ansprüche, **dadurch gekennzeichnet, dass** in einer zweiten Stellung der Luftklappe (9) die Strömungspfade (33,35) der ersten und zweiten Luftströme (39,41) sowie der erste und zweite Luftkanal(19,21) -zumindest teilweisegeöffnet sind.

5. Heizungs- oder Klimaanlage nach Anspruch 4, **dadurch gekennzeichnet, dass** in der zweiten Stellung der Luftklappe (9) der dritte Luftkanal (23) verschlossen ist.

6. Heizungs- oder Klimaanlage nach einem der vorhergehenden Ansprüche, **dadurch gekennzeichnet, dass** in einer dritten Stellung der Luftklappe (9) die Strömungspfade (33,35) der ersten und zweiten Luftströme (39,41) sowie die drei Luftkanäle (19,21,23) zumindest teilweise- geöffnet sind.

7. Heizungs- oder Klimaanlage nach einem der vorhergehenden Ansprüche, **dadurch gekennzeichnet, dass** in einer vierten Stellung der Luftklappe (9) der Strömungspfad (33) des ersten Luftstroms (39) und der erste Luftkanal (19) verschlossen sowie der Strömungspfad (35) des zweiten Luftstroms (41) und der zweite Luftkanal (21) zumindest teilweise- geöffnet sind.

8. Heizungs- oder Klimaanlage nach Anspruch 7, **dadurch gekennzeichnet, dass** in der vierten Stellung der Luftklappe (9) der dritte Luftkanal (23) verschlossen ist.

9. Heizungs- oder Klimaanlage nach einem der vorhergehenden Ansprüche, **dadurch gekennzeichnet, dass** der dritte Luftkanal (23) ein Fußraumkanal ist.

10. Heizungs- oder Klimaanlage nach einem der vorhergehenden Ansprüche, **dadurch gekennzeichnet, dass** die erste Luftklappe (9) mittels eines Stellglieds (51), vorzugsweise stufenlos, bewegbar ist.

11. Heizungs- oder Klimaanlage nach einem der vorhergehenden Ansprüche, **dadurch gekennzeichnet, dass** der erste Luftkanal (19) ein Entfrostungskanal ist und der zweite Luftkanal (21) mit mindestens einer im Mittelbereich der Fahrgastzelle vorgesehenen Belüftungsdüse oder einem -schlitz verbunden ist.

12. Heizungs- oder Klimaanlage nach einem der vorhergehenden Ansprüche, **dadurch gekennzeichnet, dass** in Strömungsrichtung vor dem Heizkörper (3) eine dritte Luftklappe vorgesehen ist, mittels derer der Strömungspfad zum Heizkörper (3) verschließbar ist.

13. Heizungs- oder Klimaanlage nach einem der vorhergehenden Ansprüche, **dadurch gekennzeichnet, dass** sie eine luftseitig geregelte Heizungs-oder Klimaanlage (1) ist.

## Claims

1. A heating or air conditioning system (1) for a vehicle with at least one heating element (3) that is arranged in a housing (5) and with multiple air ducts (19,21,23) that are arranged downstream of the heating element (3), to which can be guided a first air flow (39) made to flow through the heating element (3) and a second air flow (41) made to bypass the heating element (3), and with at least one first air flap (9) that is provided in the form of a drum-shaped flap and arranged upstream of the air ducts (19,21,23) in the direction of flow, wherein the separation of the total air quantity into the first and second air flows, the mixing of the air flows (39,41), and the distribution of the air to the air ducts (19,21,23) can be adjusted by means of the first air flap (9), wherein a cooling facility (49), more particularly an evaporator, is arranged upstream of the heating element (3) in the direction of flow, with an incoming air flow (37) being made to flow through said cooling facility (37), wherein the first air flap (9) is arranged in a mixing space (7) disposed downstream of the heating element (3) in the direction of flow, wherein the first and second air flows (39,41) can intermix with each other in said mixing space (7) and wherein a first air duct (19), a second air duct (21) as well as a third air duct (23) are in communication with said mixing space (7), wherein the first air flap (9) incorporates a drum-shaped basic body (13) which comprises first and second partial air flaps (15,17) that are arranged diametrically opposite each other and each have a cross-section having the shape of a circle segment, **characterized in that** the incoming air flow (37) can be separated into the first and second air flows (39,41) downstream of the cooling facility (49) and that a second air flap (25) which is formed as a swivelling flap and can be swivelled about an axis (27) that is stationary in relation to the housing (5) is arranged in the third air duct (23), wherein the first and second air flaps (9,25) are mechanically coupled to each other.

2. The heating or air conditioning system according to claim 1, **characterized in that**, in a first position of the air flap (9), the flow path (33) of the first air flow (39) and the first air duct (19) are open and the flow path (35) of the second air flow (41) is closed.

3. The heating or air conditioning system according to claim 2, **characterized in that**, in the first position of the air flap (9), the second air duct (21) and a third air duct (23), if any, is/are closed.

4. The heating or air conditioning system according to any one of the preceding claims, **characterized in that**, in a second position of the air flap (9), the flow paths (33,35) of the first and second air flows (39,41) and the first and second air ducts (19,21) are - at least partially - open.

5. The heating or air conditioning system according to claim 4, **characterized in that**, in the second position of the air flap (9), the third air duct (23) is closed.

6. The heating or air conditioning system according to any one of the preceding claims, **characterized in that**, in a third position of the air flap (9), the flow paths (33,35) of the first and second air flows (39,41) and the three air ducts (19,21,23) are - at least partially - open.

7. The heating or air conditioning system according to any one of the preceding claims, **characterized in that**, in a fourth position of the air flap (9), the flow path (33) of the first air flow (39) and the first air duct (19) are closed and the flow path (35) of the second air flow (41) and the second air duct (21) are - at least partially - open.

8. The heating or air conditioning system according to claim 7, **characterized in that**, in the fourth position of the air flap (9), the third air duct (23) is closed.

9. The heating or air conditioning system according to any one of the preceding claims, **characterized in that** the third air duct (23) is a foot well duct.

10. The heating or air conditioning system according to any one of the preceding claims, **characterized in that** the first air flap (9) can be moved by a control element (51), preferably in a continuous fashion.

11. The heating or air conditioning system according to any one of the preceding claims, **characterized in that** the first air duct (19) is a defroster duct and the second air duct (21) communicates with at least one ventilation nozzle or slit that is provided in the middle zone of the passenger compartment.

12. The heating or air conditioning system according to any one of the preceding claims, **characterized in that** a third air flap is provided upstream of the heating element (3) in the direction of flow and can be used to close the flow path to the heating element (3).

13. The heating or air conditioning system according to any one of the preceding claims, **characterized in that** it is an air-side-controlled heating or air conditioning system (1).

## Revendications

1. Dispositif de chauffage ou de climatisation (1) d'un véhicule comprenant au moins un corps de chauffage (3) disposé dans un logement (5) et plusieurs conduits d'air (19,21,23) situés en aval du corps de chauffage (3), auxquels peuvent être amenés un premier courant d'air (39) passant par le corps de chauffage (3) et un deuxième courant d'air (41) passant le long du corps de chauffage (3), ainsi qu'au moins un premier clapet d'air (9) qui est réalisé en tant que volet de tambour et est situé dans le sens de l'écoulement en amont des conduits d'air (19,21,23), la répartition du volume d'air total sur le premier et le deuxième courants d'air, le mélange des courants d'air (39,41) et la répartition de l'air sur les conduits d'air (19,21,23) étant réglables au moyen du premier clapet d'air (9), dans lequel un dispositif de refroidissement (49), en particulier un évaporateur, par l'intermédiaire duquel est amené un courant d'air amené (37), est situé en amont du corps de chauffage (3) dans le sens de l'écoulement, dans lequel le premier clapet d'air (9) est situé dans un espace de mélange (7) situé en aval du corps de chauffage (3) dans le sens de l'écoulement, espace dans lequel les premier et deuxième courants d'air (39,41) peuvent se mélanger l'un à l'autre et avec lequel un premier conduit d'air (19), un deuxième conduit d'air (21) ainsi qu'un troisième conduit d'air (23) sont reliés, dans lequel le premier clapet d'air (9) présente un corps de base en forme de tambour (13) qui comprend des premier et deuxième clapets d'air partiels (15,17) qui s'opposent diamétralement l'un à l'autre et présentent chacun une section transversale en forme de segment de cercle, **caractérisé en ce que** le courant d'air amené (37) peut être réparti, en aval du dispositif de refroidissement (49), en le premier et le deuxième courants d'air (39,41) et qu'un deuxième clapet d'air (25) est situé dans le troisième conduit d'air (23), lequel est réalisé en tant que clapet pivotant et peut pivoter autour d'un axe fixe (27) en face du logement (5), dans lequel le premier et le deuxième clapets d'air (9,25) sont couplés mécaniquement entre eux.

2. Dispositif de chauffage ou de climatisation selon la revendication 1, **caractérisé en ce que**, dans une première position du clapet d'air (9), le chemin de l'écoulement (33) du premier courant d'air (39) et le premier conduit d'air (19) sont ouverts et le chemin de l'écoulement (35) du deuxième courant d'air (41) est fermé.

3. Dispositif de chauffage ou de climatisation selon la revendication 2, **caractérisé en ce que**, dans la première position du clapet d'air (9), le deuxième conduit d'air (21) et, le cas échéant, le troisième conduit d'air (23) sont fermés.

4. Dispositif de chauffage ou de climatisation selon l'une des revendications précédentes, **caractérisé en ce que**, dans une deuxième position du clapet d'air (9), les chemins de l'écoulement (33,35) des premier et deuxième courants d'air (39,41) ainsi que les premier et deuxième conduits d'air (19,21) sont ouverts, du moins en partie.

5. Dispositif de chauffage ou de climatisation selon la revendication 4, **caractérisé en ce que**, dans la deuxième position du clapet d'air (9), le troisième conduit d'air (23) est fermé.

6. Dispositif de chauffage ou de climatisation selon l'une des revendications précédentes, **caractérisé en ce que**, dans une troisième position du clapet d'air (9), les chemins de l'écoulement (33,35) des premier et deuxième courants d'air (39,41) ainsi que les trois conduits d'air (19,21,23) sont ouverts, du moins en partie.

7. Dispositif de chauffage ou de climatisation selon l'une des revendications précédentes, **caractérisé en ce que**, dans une quatrième position du clapet d'air (9), le chemin de l'écoulement (33) du premier courant d'air (39) et le premier conduit d'air (19) sont fermés et le chemin de l'écoulement (35) du deuxième courant d'air (41) et le deuxième conduit d'air (21) sont ouverts, du moins en partie.

8. Dispositif de chauffage ou de climatisation selon la revendication 7, **caractérisé en ce que**, dans la quatrième position du clapet d'air (9), le troisième conduit d'air (23) est fermé.

9. Dispositif de chauffage ou de climatisation selon l'une des revendications précédentes, **caractérisé en ce que** le troisième conduit d'air (23) est un conduit de l'espace des pieds.

10. Dispositif de chauffage ou de climatisation selon l'une des revendications précédentes, **caractérisé en ce que** le premier clapet d'air (9) est manoeuvrable, de préférence progressivement, au moyen d'un organe de réglage (51).

11. Dispositif de chauffage ou de climatisation selon l'une des revendications précédentes, **caractérisé en ce que** le premier conduit d'air (19) est un conduit de dégivrage et le deuxième conduit d'air (21) est relié à au moins une buse ou une fente d'aération prévue dans la zone centrale de la cellule passagers.

12. Dispositif de chauffage ou de climatisation selon l'une des revendications précédentes, **caractérisé en ce qu'**est prévu, dans le sens de l'écoulement, en amont du corps de chauffage (3), un troisième clapet d'air au moyen duquel le chemin de l'écoulement vers le corps de chauffage (3) peut être fermé.

13. Dispositif de chauffage ou de climatisation selon l'une des revendications précédentes, **caractérisé en ce qu'**il est un dispositif de chauffage ou de climatisation (1) réglé côté air.
